Europäisches Patentamt

**European Patent Office**

**Office européen des brevets**

(19)

(11) Veröffentlichungsnummer: **0 171 734**

**A2**

(12) # EUROPÄISCHE PATENTANMELDUNG

(21) Anmeldenummer: **85109858.2**

(22) Anmeldetag: **06.08.85**

(51) Int. Cl.⁴: **A 23 N 12/08**
**A 23 F 5/04**

(30) Priorität: **16.08.84 DE 3430103**

(43) Veröffentlichungstag der Anmeldung:
**19.02.86 Patentblatt 86/8**

(84) Benannte Vertragsstaaten:
**AT BE CH FR GB IT LI LU NL SE**

(71) Anmelder: **TCHIBO-Frisch-Röst-Kaffee AG**
**Überseering 18**
**D-2000 Hamburg 60(DE)**

(72) Erfinder: **Kaatze, Michael**
**Kiefernweg 11**
**D-2117 Tostedt(DE)**

(72) Erfinder: **Reiff, Dieter**
**Birkenweg 31**
**D-2082 Tornesch(DE)**

(74) Vertreter: **UEXKÜLL & STOLBERG Patentanwälte**
**Beselerstrasse 4**
**D-2000 Hamburg 52(DE)**

(54) **Verfahren zum Rösten von Kaffee mittels eines Laden-Kleinrösters.**

(57) Die Erfindung betrifft ein Verfahren zum Rösten von Kaffee mittels eines LadenKleinrösters, bei dem der in einen Röster gegebene Rohkaffee bis zur Endrostung über einen gesteuerten Brenner mit Heißluft versorgt und nach abgeschalteter Röstung mit Wasser vorgekühlt und anschließend auf eine Kühlsieb ausgetragen und mit Luft gekühlt wird, und das dadurch gekennzeichnet ist, daß der Kaffee bei einer konstant gehaltenen oder geregelten Bereitschaftstemperatur ($t_H$) in die Röstkammer (12) des Rösters eingegeben wird, nachdem eine Zufuhrvorrichtung (80, 81) für den Rohkaffee nach Austragung des gerösteten und gekühlten Röstkaffees der vorherigen Charge zur weiteren Beschickung freigegeben worden ist, und daß nach Durchlaufen des unteren Scheitelwertes der in der Röstkammer erreichten Tiefsttemperatur ($t_U$) der Kaffee bis zue Erreichung einer sortenabhängig eingestellten Röstendtemperatur ($t_E$) geröstet und nach Erreichen dieser Temperatur durch zeitabhangige oder volumenbestimmte Wasserzugabe vorgekühlt und anschließend auf ein in einer Kühlkammer (20) befindliches schwenkbares Kühlsieb (76) ausgetragen wird; die Erfindung betrifft ferner eine Vorrichtung zur Durchführung des Verfahrens bestehend aus einer Röstkammer mit Schaufelwerk, einer mit dieser über eine Entleerungsklappe verbundenen Kühlkammer mit schwenkbarem Kühlsieb, die in einen Austrageschacht mündet, wobei im Übergangsbereich vom Aufgabetrichter (10) zur Röstkammer (12) eine von einem Stellmotor oder Hubmagneten (80) gesteuerte Einfüllklappe (81) vorgesehen ist, die nach Betätigung der Entleerungsklappe (18) für die Röstkammer (12) und des Kühlsiebes (76) und nach Erreichen der Bereitschaftstemperatur ($t_B$) auslösbar ist, u. bei der vorzugsweise unterhalb des Austrageschachtes ein mit einem Rührwerk (72) betriebenes Präsentationsbe... (70) vorgesehen ist.

Croydon Printing Company Ltd.

0171734

## Beschreibung

Die Erfindung betrifft ein Verfahren zum Rösten von Kaffee mittels eines Laden-Kleinrösters, bei dem der in einen Röster gegebene Rohkaffee bis zur Endröstung über einen geregelten Brenner mit Heißluft versorgt und nach Abschalten der Röstung mit Wasser vorgekühlt und anschließend auf ein Kühlsieb ausgetragen und mit Luft endgekühlt wird.

Die Erfindung betrifft ferner eine zur Durchführung des Verfahrens geeignete Vorrichtung.

Verfahren bzw. Vorrichtungen zum Rösten von Kaffee im absatzweisen Großbetrieb in dieser angegebenen Weise sind allgemein bekannt. Bei diesem Verfahren sind Fachkräfte erforderlich, die für das zeitgerechte Einbringen von Rohkaffee bzw. für das Austragen von Röstkaffee Sorge tragen und auch die Beendigung des Röstens sowie die Art und Dauer der Kühlung aufgrund ihrer großen Erfahrung bestimmen. Das Erkennen der Beendigung des Röstens erfolgt durch den Röstmeister aufgrund von Erfahrungswerten am Ende einer zeitlichen Steuerung und gegebenenfalls durch einen Vergleich der Farbe der gerösteten Kaffeebohnen.

Die Erfindung hat sich die Aufgabe gestellt, ein Kaffeeröstverfahren bzw. eine hierzu geeignete Vorrichtung vorzuschlagen, die es ermöglicht, mit technisch nicht geschultem Personal die Kaffeeröstung in einer Verkaufsstätte mit einem sogenannten Laden-Kleinröster durchzuführen und ferner eine sortenspezifische optimale Röstung der einzelnen Provenienzen auf einfache Weise zu ermöglichen, um den gerösteten Kaffee der einzelnen Provenienzen nach Kundenwünschen entsprechend zusammenzustellen. Ferner soll das gesamte Verfahren so gesteuert wereden, daß praktisch nur ein einziger Schalter zu betätigen ist, um den Röstvorgang von der Befüllung bis zur Austragung in Gang zu setzen, wobei der Ablauf des Röstens selber sortenspezifisch einstellbar ist.

Es sind zwar kleine Laborröster bekannt, die jedoch ebenfalls nur von Fachpersonal bedienbar sind. Die Umstellung des viel Erfahrung und Geschick erfordernden Röstverfahrens der verschiedensten Kaffeesorten mit unterschiedlichen Rösttemperaturen und unterschiedlichen Kühlzeiten auf ein praktisch von jeder Verkaufshilfe durchzuführendes Verfahren war wegen der damit verbundenen Schwierigkeiten bislang nicht fehlerfrei möglich.

Zur Lösung der erfindungsgemäßen Aufgabe wird daher ein Verfahren gemäß Hauptanspruch und eine entsprechende Vorrichtung gemäß Anspruch 4 vorgeschlagen, wobei besonders bevorzugte Ausführungsformen und besonders geeignete Vorrichtungen in den Unteransprüchen beschrieben sind.

Wesentlich ist bei dem erfindungsgemäßen Verfahren, daß die Röstkammer mit oder ohne Rohkaffee wahlweise auf eine Bereitschaftstemperatur $t_B$ von etwa 220 bis 350°C und vorzugsweise 320°C gebracht bzw. gehalten wird, die nach Einbringen des kalten Rohkaffees sofort sprunghaft absinkt, einen Scheitelwert der tiefsten Temperatur $t_U$ von etwa 120 bis 180°C durchläuft und langsam beim Rösten bis zu der für die betreffende Provenienz ausgewählten Röstendtemperatur $t_E$ von zum Beispiel 350 bis 380°C ansteigt. Bei Erreichen dieser von einem Temperaturfühler erfaßten Röstendtemperatur wird die Vorkühlung mit Wasser ausgelöst, an die sich dann die Luftkühlung und das Austragen anschließen. Die Einhaltung der Bereitschaftstemperatur ist zwar etwas energieaufwendiger, ermöglicht aber ein reproduzierbares optimales Rösten der verschiedenen

0171734

Provenienzen in Abhängigkeit von der betreffenden Röstendtemperatur.

Gemäß der Erfindung ist es ferner möglich, daß ungeschultes Personal erst dann den zu röstenden Kaffee in die
Röstkammer eingeben kann, wenn der in der Röstkammer
bzw. in der Kühlkammer befindliche Kaffee ausgetragen
ist. Diese Freigabe des Aufgabetrichters erfolgt erst
nach Ablauf eines entsprechenden Programms, mit welchem
die Freigabesignale der verschiedenen Aggregate eingehen,
wie beispielsweise Rückmeldung der Entleerung der Röstkammer und des Kühlsiebes, Meldung des ordnungsgemäßen
Betriebes der Heißluft und der systembedingten Aggregate.

Von besonderer Bedeutung ist sowohl bei dem erfindungsgemäßen Verfahren als auch bei der erfindungsgemäßen
Vorrichtung die Tatsache, daß man je nach Wunsch den
gerösteten Kaffee bei Entleerung des Kühlsiebes entweder
auf ein Präsentationssieb, oder aber in einen Auffangbehälter führen kann, der für den Ladenkunden nicht ohne
weiteres erkennbar ist. Hierdurch ist es möglich, in einem
normalen Ladenbetrieb durchgehend chargenweise Kaffee zu
rösten und nur bei entsprechendem Kundeninteresse eine der
Chargen auf das Präsentationssieb zu geben.

Im folgenden soll der erfindungsgemäße Laden-Kleinröster
im Zusammenhang mit der Schemazeichnung näher erläutert
werden.

Der Laden-Kleinröster besteht im vorliegenden Beispiel aus
einer Röstkammer 12, die mit einem Schaufelwerk 16, einem
Aufgabetrichter 10 und einem Temperaturfühler 14 und einer
Entleerungsklappe 18 versehen ist. Unterhalb der Röstkammer befindet sich eine Kühlkammer 20 mit einem schwenkbaren Kühlsieb 76, die bei Öffnung in einen Austrageschacht 26 führt.

Zu der Röstkammer 12 führen eine Leitung 32, für Heiß- oder Frischluft, die entweder von einer Heißzuluftleitung 42 oder von einer Frischluftleitung 46 versorgt wird, sowie eine Kühlwasserleitung 30. Von der Röstkammer führt eine Röstluftableitung 48, 48' über einen zwischengeschalteten Abscheider 50 mit Sammelbehälter 52 für die Häutchen und Röststaubfeinteile über einen Ventilator 56 zu einem Heißluftofen 40. Auf diese Weise wird die Röstluft im Kreislauf geführt und je nach Bedarf wieder aufgeheizt.

Von der Kühlkammer 20 führt eine Abluftleitung 34 über einen Ventilator 36 für die Kühlluft in eine Abgasleitung 38, in das auch eine mit der Heißluftleitung 42 verbundene Heißluftableitung 44 mündet.

Der Heißluftofen 40 wird über eine Gaszuleitung 60 und eine Brennerluftleitung 62 mit einem entsprechenden durch einen Motor 67 angetriebenen Ventilator 64 für die Brennerluft versorgt, wobei eine Brennersteuerung und -überwachung 66 mit Überwachungselementen für die gewünschte Temperatur der Röstgase und die Steuerung einer Mischklappe 68 sorgt.

Der Aufbau dieses Laden-Kleinrösters entspricht im Prinzip einer absatzweise arbeitenden Großröstanlage, bei der der Rohkaffee mit Heißluft geröstet wird, die im Kreislauf wieder über den Brenner zurückgeführt und in diesem aufgeheizt wird; nach Beendigung des Röstens wird der Kaffee im Röster mit Wasser vorgekühlt und in der Kühlkammer mit Luft fertig gekühlt. Bei erfindungsgemäßen Laden-Kleinröstern wird die Röstkammer mit einem Fassungsvermögen von etwa 2 bis 10 kg und die Kühlkammer mit einer Kühlsiebfläche von etwa 0,1 bis 0,5 $m^2$ ausgestaltet.

Zusätzlich zu einem derart abgewandelten Laden-Kleinröster befindet sich zur besseren Steuerung der Anlage an der Eintrageseite am Ende des Aufgabetrichters 10 eine Einfüllklappe 81, die elektromechanisch und im vorliegenden Fall durch einen Stellmotor oder einen Hubmagneten 80 betätigt wird. An der Austrageseite ist analog eine durch einen Stellmotor oder einen Hubmagneten 82 betätigte Entleerungsklappe 18. Das Kühlsieb 76 wird durch ein Bedienungselement 84 geöffnet.

Ferner befindet sich unterhalb des Austrageschachtes 26 ein Präsentationssieb 70 mit einem motorisch angetriebenen Rührwerk 72.

Neben dem Austrageschacht 26 ist ein zu einem Auffangbehälter 74 führender Schacht vorgesehen, der mittels einer Klappe 76 in der Kühlkammer 20 geöffnet bzw. geschlossen werden kann. Es können auch mehrere derartige Behälter vorgesehen sein, die über entsprechend angeordneten Schurren versorgt werden können.

Ferner sind ein Antriebsmotor 86 für das Schaufelwerk 16, ein weiterer Antriebsmotor 88 für den Röstventilator 56 und ein Antriebsmotor 90 für den Kühlventilator 36 vorgesehen sowie ein entsprechender Stellmotor 92 für die Mischklappe 68 des Brenners und eine steuerbare Zufuhrklappe 94 für die Heißluftleitung 42 mit einem entsprechenden Hubmagneten oder Stellmotor 96. Analog ist in der Frischluftleitung 46 eine Zufuhrklappe 98 für die Frischluft vorgesehen, die mit einem Hubmagneten oder Stellmotor 100 betätigt wird. Zwischen der Heißluftleitung 42 und dem Dunstrohr 38 befindet sich eine mit Katalysator und oder Absorbtionsmittel gefüllte Kammer 102 zur Reinigung der Abluft.

In der Röstluftrückleitung 48' befindet sich vor dem Brenner eine manuell oder motorisch einstellbare Drosselklappe 104 für die Heißluft, sowie stromaufwärts ein Druckwächter 108 für die Heißluft.

Mit diesen zusätzliche Aggregaten, die auf den Betrieb eines Laden-Kleinrösters abgestellt sind, läßt sich das erfindungsgemäße Röstverfahren auch durch ungeschultes Bedienungspersonal durchführen und wobei der Kaffee in reproduzierbarer gleichmäßiger Qualität entsprechend den jeweiligen Sorten anfällt.

Durch die von einem Stellmotor oder Hubmagneten 80 gesteuerte Einfüllklappe 81 ist die Zufuhr von Rohkaffee zum Röster erst möglich, wenn die Röstkammer 12 entleert und die Entleerungsklappe 18 geschlossen ist. Dadurch wird vermieden, daß durch unachtsames Bedienungspersonal die in Betrieb befindliche Röstkammer mit einer weiteren Charge Rohkaffee beschickt bzw. überladen wird.

Der entsprechend gekühlte und auf dem Kühlsieb 76 befindliche Kaffee wird nach Beendigung des Kühlvorganges durch Betätigung des Bedienungselementes 84 in den Austrageschacht 26 und von dort auf ein Präsentationssieb 70 entleert, wobei der frisch geröstete Kaffee auf dem Präsentationssieb noch durch das Rührwerk 72 durchmischt werden kann.

Ein oder mehrere Auffangbehälter 74, die unterhalb des Kühlsiebes 76 angeordnet sind, dienen entweder zur Aufnahme von ebenfalls frisch geröstetem Kaffee, der aus beliebigen Gründen, z. B. weil das Präsentationssieb 70 noch nicht entleert worden ist, in einen anderen Behälter gelagert werden soll, oder können unerwünschte Röstartikel aufnehmen, die gegebenenfalls auch abgesaugt werden können.

Die vorgesehenen Antriebe 86, 88, 90 für das Schaufelwe... 16 bzw. den Röstventilator 56 bzw. für den Kühlventilat... 36 sowie die Stellmotoren oder Hubmagneten 92, 96 und 1CC für die Mischklappe 68 für den Brenner bzw. die Zufuhrklappe 94 für die Heißluft oder die Zufuhrklappe 98 für die Frischluft bzw. für die Drosselklappe 104 für die Heißluft und der Motor 67 für den Ventilator 64 werden von einer vorprogrammierten Steuerung, die für eine Bedienung durch ungeschultes Personal zweckmäßig ist, betätigt.

Diese Steuerung erfolgt vorzugsweise nach einem wie folgt dargestellten Funktionsplan.

In der Ausgangsstellung laufen nach Einschalten eines Hauptschalters alle Antriebe auf Bereitschaft; es wird d.. Bedienungshebel 84 für das Kühlsieb 76 betätigt und die Rückmeldung "leer" bestätigt. Beim Empfang dieses Signal. fährt die Entleerungsklappe 18 einmal auf und wieder zu. Nach Meldung dieser Zustände, nämlich, daß die Entleerun... klappe 18 geschlossen und das Kühlsieb 76 leer ist, werde.. zum Antrieb des Rösters das Schaufelwerk 16, der Röstver... lator 56 und der Kühlventilator 36 eingeschaltet, worauf die Vorbereitungsphase für den Brenner erreicht ist. Der Brennerregler 66 läuft auf einen Nullwert, die Zufuhrklappe 94 für Heißluft und die Zufuhrklappe 98 für Frisc.. luft werden durch die entsprechenden Stellmotoren 96 und 100 auf Spülstellung gestellt und anschließend das Schalt. programm für die Brennerregelung ausgelöst, indem die Gaszufuhr über die Leitung 60 freigegeben und die Zündu... des Brenners durchgeführt und die Zufuhrklappe 94 für die Heißluft und die Zufuhrklappe 98 für Frischluft auf Betriebsstellung gefahren werden.

Nach entsprechender Meldung über den vor der Einfüllklapp..

vorhandenen Rohkaffee und Erreichung der Einfüll- oder Bereitschaftstemperatur wird die Einfüllklappe 81 über den Stellmotor oder Hubmagneten 80 ausgelöst und wieder verschlossen, was durch ein optisches Signal angezeigt werden kann. Nach Erreichen der Röstendtemperatur wird über ein vom Wäremfühler 14 erhaltenes Signal die Zufuhr von Heißluft automatisch abgestellt und über die Kühlwasserleitung 30 Kühlwasser in die Röstkammer geleitet, wobei dieser Vorgang wahlweise mengenabhängig oder zeitabhängig gesteuert wird; gleichzeitig wird die Zufuhrklappe 94 für Heißluft durch den Stellmotor 96 geschlossen. Nach Ablauf der Mengen- oder Zeitsteuerung für die Kühlwasserzufuhr wird mit Erhalt eines optischen oder akustischen Kontrollsignals die Öffnung der Entleerungsklappe 18 zur Kühlkammer 20 automatisch ausgelöst. Nach einer zeitgesteuerten Kühlung mit Luft wird wiederum über ein akustisches oder optisches Signal manuell oder auch automatisch das Kühlsieb 76 zur Entleerung abgekippt, wobei sich das Rührwerk 72 für das Präsentationsblech 70 automatisch einschaltet oder permanent mitläuft. Je nach Mengenanfall oder Beschäftigungslage kann auch die Klappe 76 für den Auffangbehälter 74 ausgelöst werden. Nach erfolgter Austragung des gerösteten Kaffees fährt die Anlage automatisch wieder auf Bereitschaft.

0171734

10 Aufgabetrichter

12 Röstkammer

14 Thermoelement

16 Schaufelwerk

18 Entleerungsklappe der Röstkammer

20 Kühlkammer

26 Austrageschacht

30 Kühlwasserleitung

32 Leitung für Heiß- oder Frischluft

34 Abluftleitung

36 Ventilator für Kühlluft

38 Dunstrohr

40 Heißluftofen

42 Heißluftzuleitung

44 Heißluftableitung

46 Frischluftleitung

48 48' Röstluftableitung

50 Abscheider

52 Sammelbehälter

56 Ventilator für Röstzuluft

60 Gaszuleitung

62 Brennerluftleitung

64 Ventilator für Brennerluft

66 Brennersteuerung und Überwachung

67 Motor für Ventilator

68 Mischklappe

70 Präsentationssieb

72 Rührwerk für Präsentationssieb (70)

74 Auffangbehälter

76 schwenkbares Kühlsieb

80 Stellmotor oder Hubmagnet für Einfüllklappe (81)

81 Einfüllklappe

82 Stellmotor oder Hubmagnet für Entleerungsklappe (18) 84 Bedienungselement für Kühlsieb

86 Antrieb für Schaufelwerk (16)

88 Antrieb für Röstventilator (56)

90 Antrieb für Kühlventilator (36)

92 Stellmotor für Mischklappe

94 Zufuhrklappe für Heißluft

96 Stellmotor oder Hubmagnet für Klappe 94

98 Zufuhrklappe für Frischluft

100 Stellmotor oder Hubmagnet für Klappe 98

102 Kammer für Katalysator/Absorber für Abluft

104 Drosselklappe für Heißluft

106 Stellmotor für Heißluft

108 Druckwächter für Heißluft

UEXKÜLL & STOLBERG
PATENTANWÄLTE

BESELERSTRASSE 4
D·2000 HAMBURG 52

DR. J.-D. FRHR. von UEXKÜLL
DR. ULRICH GRAF STOLBERG
DIPL.-ING. JÜRGEN SUCHANTKE
DIPL.-ING. ARNULF HUBER
DR. ALLARD von KAMEKE

**0171734**

TCHIBO
Frisch-Röst-Kaffee AG
Überseering 18

2000 Hamburg 60

(20948 ue/co)
August 1984

## Verfahren zum Rösten von Kaffee mittels eines Laden-Kleinrösters

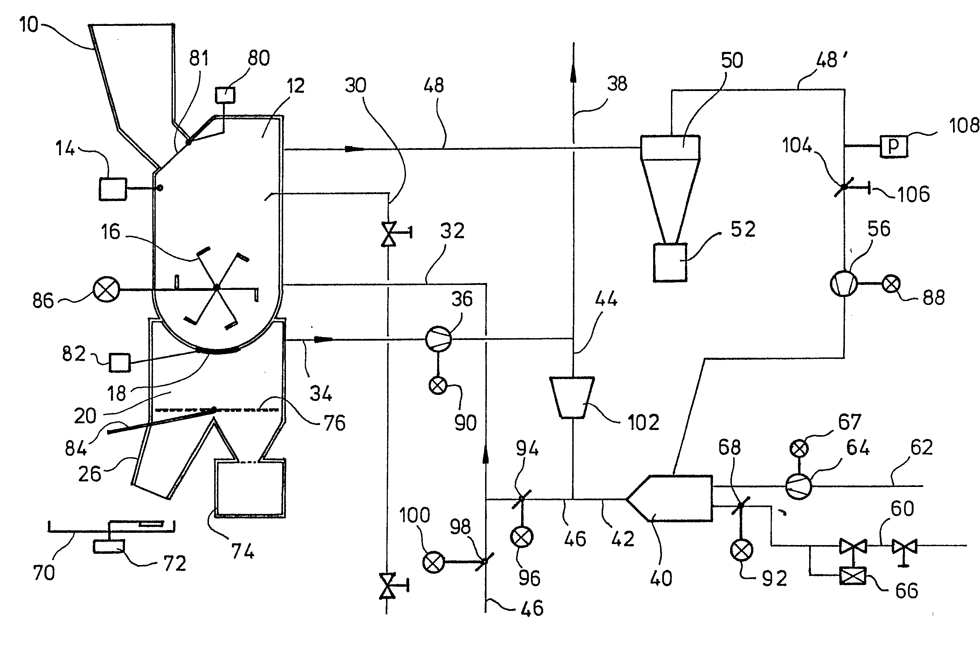

### Patentansprüche

1. Verfahren zum Rösten von Kaffee mittels eines Laden-Kleinrösters, bei dem der in einen Röster gegebene Rohkaffee bis zur Endröstung über einen gesteuerten Brenner mit Heißluft versorgt und nach abgeschalteter Röstung mit Wasser vorgekühlt und anschließend auf ein Kühlsieb ausgetragen und mit Luft gekühlt wird, dadurch gekennzeichnet, daß der Kaffee bei einer konstant gehaltenen oder geregelten Bereitschaftstemperatur ($t_B$) in die Röstkammer (12) des Rösters eingegeben wird, nachdem eine Zufuhrvorrichtung (80, 81) für den Rohkaffee nach Austragung des gerösteten und gekühlten Röstkaffees der vorherigen Charge zur weiteren Beschickung freigegeben worden ist, und daß nach Durchlaufen des unteren Scheitelwertes der in der Röstkammer erreichten Tiefsttemperatur

0171734

($t_U$) der Kaffee bis zur Erreichung einer sortenabhängig eingestellten Röstendtemperatur ($t_E$) geröstet
und nach Erreichen dieser Temperatur durch zeitabhängige oder volumenbestimmte Wasserzugabe vorgekühlt
und anschließend auf ein in einer Kühlkammer (20)
befindliches schwenkbares Kühlsieb (76) ausgetragen
wird.

2. Verfahren nach Anspruch 1, dadurch gekennzeichnet, daß
nach Ablauf der vorgegebenen Kühlzeit die Öffnung des
Kühlsiebes (76) angezeigt und der Röstkaffee von dem
Kühlsieb auf ein Präsentationssieb (70) ausgetragen
wird.

3. Verfahren nach Anspruch 1 und 2, dadurch gekennzeichnet, daß nach Austragen des Röstkaffees auf das
Kühlsieb (76) und nach Schließen der Entleerungsklappe
(18) Heißluft automatisch zur Aufheizung der Röstkammer (12) auf die Bereitschaftstemperatur ($t_B$) zugeführt wird.

4. Verfahren nach Anspruch 1, dadurch gekennzeichnet,
daß man für die jeweiligen Sorten empirisch ermittelte
Röstendtemperaturen bedienungsunabhängig vorgibt.

5. Vorrichtung zur Durchführung des Verfahrens nach
Anspruch 1 bis 3, bestehend aus einer Röstkammer
mit Schaufelwerk, einer mit dieser über eine Entleerungsklappe verbundenen Kühlkammer mit schwenkbarem
Kühlsieb, die in einen Austrageschacht mündet, dadurch
gekennzeichnet, daß im Übergangsbereich vom Aufgabetrichter (10) zur Röstkammer (12) eine von einem
Stellmotor oder Hubmagneten (80) gesteuerte Einfüllklappe (81) vorgesehen ist, die nach Betätigung der Entleerungsklappe (18) für die Röstkammer (12) und des
Kühlsiebes (76) und nach Erreichen der Bereitschaftstemperatur ($t_B$) auslösbar ist.

6. Vorrichtung nach Anspruch 4, dadurch gekennzeichnet,
daß unterhalb des Austrageschachtes (26) ein mit
einem Rührwerk (72) betriebenes Präsentationsblech
(70) vorgesehen ist.

7. Vorrichtung nach Anspruch 5, dadurch gekennzeichnet,
daß das schwenkbare Kühlsieb (76) mittels eines
Handgriffes (84) wahlweise entweder zur Öffnung in
einen Austrageschacht (26) oder in einen oder mehrere
Auffangbehälter (74) bewegbar ist.